# EUROPÄISCHE PATENTANMELDUNG

(11) **EP 4 160 839 A1**
(43) Veröffentlichungstag der Anmeldung: **05.04.2023**
(21) Anmeldenummer: 22401022.3
(22) Anmeldetag: 01.09.2022
(51) Int. Cl.: H02G 3/12, H02G 3/18

(54) **KOPPLUNGSELEMENT UND VERWENDUNG EINES SOLCHEN SOWIE VERFAHREN ZUR EINSTELLUNG DER DOSENTIEFE**

(30) Priorität: 30.09.2021 DE 102021125389
(71) Anmelder: Albrecht Jung GmbH & Co. KG, 58579 Schalksmühle (DE); Insta GmbH, 58509 Lüdenscheid (DE)
(72) Erfinder: Fobbe, Tobias, 58638 Iserlohn (DE); Maslow, Stefan, 58339 Breckerfeld (DE)

(57) **Zusammenfassung**

Zu dem Zweck, ein Kopplungselement 1 zum Ankoppeln an eine Dose 4 der Gebäudeinstallationstechnik zu schaffen, das eine einfache und passgenaue Einstellung der Dosentiefe ermöglicht, um beispielsweise bei einem nachträglich geänderten Wandaufbau, beispielweise nachträglich aufgebrauchten Fliesen, Steinplatten (Spritzschutz), Dämmung oder einer Trockenbauebene das erforderliche Dosentiefenmaß zur Festlegung von elektrischen Geräten bereitstellen zu können, wird ein Kopplungselement 1 zum Ankoppeln an eine Dose 4 der Gebäudeinstallationstechnik, insbesondere einer Unterputzdose, zur Festlegung von elektrischen Geräten, insbesondere Steckdosen oder Schaltern, in der Dose 4, mit einem freien Ende vorgeschlagen, wobei das Kopplungselement 1 so an das freie Ende der Dose 4 angekoppelt ist, dass die Dosentiefe der Dose 4 stufenlos einstellbar ist

## Beschreibung

Die Erfindung betrifft ein Kopplungselement zum Ankoppeln an eine Dose der Gebäudeinstallationstechnik, insbesondere einer Unterputzdose, zur Festlegung von elektrischen Geräten, insbesondere Steckdosen oder Schaltern, in der Dose, mit einem freien Ende. Die Erfindung betrifft ferner die Verwendung eines solchen sowie ein Verfahren zur nachträglichen stufenlosen Einstellung der Dosentiefe einer Dose der Gebäudeinstallationstechnik, insbesondere einer Unterputzdose, zur Festlegung von elektrischen Geräten, wobei die Dose in einer Ausnehmung einer Wand mittels eines Festlegungsmittels, insbesondere Gips, festgelegt ist.

Dosen der Gebäudeinstallationstechnik, insbesondere Unterputzdosen, dienen dazu, elektrische Geräten, wie beispielsweise Steckdosen, Schalter oder Dimmer festzulegen. Dabei sind sogenannte Putzausgleichsringe bekannt geworden, die dazu dienen, Abweichungen zwischen dem Putz und dem freien Ende der Unterputzdose zu kompensieren, so dass eine ordnungsgemäße Festlegung der elektrischen Geräte in der Dose sichergestellt ist. Hierzu werden beliebig viele Ausgleichsringe übereinandergestapelt, um die effektive Dosentiefe zu erhöhen, bis das freie Ende im Wesentlichen in einer Ebene mit der Putzebene liegt. Aufgrund der Quantelung der Ausgleichsringe, beispielsweise bekannt aus DE 20 2014 102 016 U1, muss der Elektriker regelmäßig eine Vielzahl von Ausgleichsringen übereinanderstapeln, um zur gewünschten Dosentiefe zu gelangen.

Problematisch dabei ist, dass der Elektriker eine Vielzahl der Ausgleichsringe nicht nur vorhalten und kombinieren muss, um möglichst nah an das gewünschte Maß heranzukommen. Aufgrund der typischen Diskretisierung von Putzausgleichsringen mit einer Höhe von 12 mm oder 24 mm ist eine Einstellung der Dosentiefe auch nicht zwangsläufig sichergestellt, so dass im Zweifel durch Kürzen der Ausgleichsringe das gewünschte Maß erreicht wird.

Im Bestandsbau ergibt sich überdies das Problem, dass regelmäßig unzureichende Dosentiefen für das Festlegen elektrischer Geräte, also: das Unterbringen von Aktoren zum Dimmen, Schalten oder dergleichen, existieren. Dieses macht es regelmäßig erforderlich, dass die alten Unterputzdosen ausgebaut und durch neue Dosen ersetzt werden müssen. Dieses ist nicht nur nicht aus Gründen der Nachhaltigkeit bedenklich, sondern auch sehr aufwendig.

Ausgehend von diesem diskutierten Stand der Technik liegt der Erfindung die Aufgabe zugrunde, ein Kopplungselement zum Ankoppeln an eine Dose der Gebäudeinstallationstechnik zu schaffen, das eine einfache und passgenaue Einstellung der Dosentiefe ermöglicht, um beispielsweise bei einem nachträglich geänderten Wandaufbau, beispielweise nachträglich aufgebrauchten Fliesen, Steinplatten (Spritzschutz), Dämmung oder einer Trockenbauebene das erforderliche Dosentiefenmaß zur Festlegung von elektrischen Geräten bereitstellen zu können.

Verfahrenstechnisch liegt der Erfindung ferner die Aufgabe zugrunde, ein Verfahren bereitzustellen, durch das im Bestandsbau nachträglich der für die Integration von Aktoren notwendige Bauraum in der Unterputzdose auf nachhaltige Weise bereitgestellt werden kann.

Gelöst wird diese Aufgabe durch ein Kopplungselement, wobei das Kopplungselement so an das freie Ende der Dose angekoppelt ist, dass die Dosentiefe der Dose stufenlos einstellbar ist.

Die verfahrenstechnische Aufgabenstellung wird durch ein Verfahren zur nachträglichen stufenlosen Einstellung der Dosentiefe einer Dose der Gebäudeinstallationstechnik, insbesondere einer Unterputzdose, zur Festlegung von elektrischen Geräten, wobei die Dose in einer Ausnehmung einer Wand mittels eines Festlegungsmittels, insbesondere Gips, festgelegt ist, gelöst, welches Verfahren die folgenden Schritte umfasst:
- Lösen der in der Ausnehmung befindlichen Dose, so dass diese in Richtung der Dosentiefe verschieblich ist,
- Verschieben der Dose in die Ausnehmung der Wand hinein,
- Ankopplung eines erfindungsgemäßen Kopplungselementes an die Dose, wobei die gewünschte Dosentiefe stufenlos eingestellt wird und
- Festlegung der Dose und/oder des Kopplungselementes mit einem Festlegungsmittel, insbesondere Gips.

Stufenlos im Sinne der Erfindung meint eine Verstellung im Bereich einer Diskretisierung von 4 mm oder weniger, insbesondere 2 mm oder weniger.

Der Kerngedanke des vorrichtungsbezogenen Teils der Erfindung besteht darin, dass das erfindungsgemäße Kopplungselement zum Ankoppeln an eine Dose der Gebäudeinstallationstechnik die Dosentiefe stufenlos einstellbar macht, um auf die durch einen nachträglichen Wandaufbau bedingten geometrischen Veränderungen, insbesondere des Abstandes zwischen freiem Ende der Dose und der Wandebene, reagieren zu können. Da das an die Dose angekoppelte erfindungsgemäße Kopplungselement die Dosentiefe stufenlos einstellbar macht, entfällt das bei dem Stand der Technik erforderliche Vorhalten und Stapeln von alternativen Ausgleichselementen. Hierdurch wird der die Montage regelmäßig vornehmende Elektriker auf vorteilhafte Weise in die Lage versetzt, flexibel durch ein einziges, insbesondere einteiliges, Produkt, das erforderliche Dosentiefenmaß bereitzustellen, so dass die Festlegung von elektrischen Unterputzgeräten, beispielsweise von Schaltern, Dimmern oder Steckdosen, mittels spreizbarer Krallen sichergestellt werden kann. Gerade bei Steckdosen, wirken erhebliche Zug- und Druckkräfte, so dass eine mechanisch stabile Befestigung unabdingbar ist.

Besonders bevorzugt weist das Kopplungselement ein Kopplungsgewinde auf, welches mit einem in der Dose festgelegten Gegengewinde wechselwirkt. Hierdurch wird eine besonders einfache, werkzeuglose Handhabung für den Elektriker ermöglicht, indem er das Kopplungselement gewissermaßen in die Dose, genauer: das Gegengewinde der Dose, hineindreht, bis die gewünschte Dosentiefe erreicht ist. Diese Art der Installation ist nicht nur einfach und werkzeuglos, sondern sogar besonders intuitiv durchführbar. Dabei kann das Gegengewinde in der Dose angeordnet sein oder alternativ in einem in der Dosenwandung gehaltenen Vermittlungsring, welcher in der Dose festlegbar ist.

Bei der erfindungsgemäßen Ausgestaltung, bei der das Kopplungselement in einem in der Dosenwandung gehaltenen Vermittlungsring festgelegt ist, wird zugunsten der erhöhten Kompatibilität des Kopplungselementes zu unterschiedlichen Dosen bewusst auf den Vorteil der ansonsten realisierbaren Einteiligkeit verzichtet.

In einer alternativen erfindungsgemäßen Ausgestaltung weist das Kopplungselement mindestens ein Rastmittel auf, welches mit Vorund/oder Rücksprüngen der Dose zur stufenlosen Einstellung der Dosentiefe wechselwirkt. Das Einrasten des Kopplungselementes bezüglich der Dose - oder in einer alternativen Ausgestaltung auch bezüglich des zu den Vor- und/oder Rücksprüngen der Dose korrespondierende Rück- und/oder Vorsprünge aufweisenden Vermittlungsrings - bietet den Vorteil, die stufenlose Einstellbarkeit zu realisieren, indem die Dimensionierung der beteiligten Vor- und/oder Rücksprünge entsprechend fein ausgeführt wird, wobei zudem ein sehr intuitives Einstellen der Dosentiefe erreicht wird.

Es versteht sich, dass sowohl die Vor- und/oder Rücksprünge (Rastlösung) als auch das Gewinde (Schraublösung) nicht zwangsläufig an der Innenwand der Dose, sondern auch an der Außenwand der Dose angeordnet sein können. Falls die Innen- oder Außenwand der Dose, an der das Gewinde oder die Vor- und/oder Rücksprünge ausgebildet sein soll, eine besondere Geometrie aufweisen, beispielsweise Schraubdome zum Eingriff von Schrauben, die beispielsweise elektrische Geräte an der Dose festlegen sollen, können die Vor- und/oder Rücksprünge oder auch das Gewinde auch lediglich an solchen Bauteilen ausgebildet sein. Hierdurch kann insbesondere die bei vielen Dosen verbreitete Funktionalität der Schraubdome beibehalten werden, damit neben einer typischen Festlegung mittels Spreizkrallen auch eine Verschraubung möglich ist.

Gemäß einer weiteren alternativen erfindungsgemäßen Ausgestaltung ist das Kopplungselement als Passstück bezüglich der Dose ausgebildet und kraftschlüssig zur stufenlosen Einstellung der Dosentiefe in die Dose eingesetzt. Dabei weist die das Kopplungselement bevorzugt lokale, zu der jeweiligen Dosenform korrespondierende, Ausnehmungen auf, um die Verschiebbarkeit auch für unterschiedliche Dosenformen sicherzustellen.

In einer bezüglich der Kompatibilität des erfindungsgemäßen Kopplungselementes zu unterschiedlichen Dosendurchmessern verbesserten Ausgestaltung weist das Kopplungselement mindestens einen Absatz auf, wobei das Kopplungselement aus zwei Abschnitten mit unterschiedlichen Durchmessern gebildet ist, um flexibel für unterschiedliche Dosendurchmesser einsetzbar zu sein.

Besonders bevorzugt weist das erfindungsgemäße Kopplungselement Schraubdome zur Festlegung von elektrischen Geräten, insbesondere von Steckdosen oder Schaltern, auf, die einen Anschluss an die Dose über Schrauben ermöglichen. Somit ist nicht nur eine weit verbreitete Befestigung mittels Spreizkrallen, sondern auch über Schrauben an der Dose möglich, so dass der Elektriker die volle Montage-Variabilität beibehält.

Dabei weisen die erfindungsgemäßen, auf der Rastlösung basierenden Ausgestaltungen, den Vorteil auf, dass diese unabhängig von der Existenz von Schraubdomen an dem erfindungsgemäßen Kopplungselement durchführbar sind, während die auf der Schraublösung basierenden Ausgestaltung zur Einhaltung einer stufenlosen Dosentiefeneinstellung eine entsprechende Gewindesteigung aufweisen müssen, da die Schraubdome der Dose und des Kopplungselementes übereinander liegen müssen, also: regelmäßig halbe oder viertel Drehungen des Kopplungselementes erforderlich machen.

Ferner betrifft die Erfindung die Verwendung eines vorbeschriebenen erfindungsgemäßen Kopplungselementes zur Überbrückung der Distanz zwischen dem freien Ende der Dose und der Wandebene. Hierdurch kann die Dosentiefe stufenlos eingestellt werden.

Zudem betrifft die Erfindung eine Dose und ein solches Kopplungselement zum Ankoppeln an die Dose, wobei die Dose eine herkömmliche Unterputzdose ist, die zur Ankopplung des Kopplungselementes ein Gegengewinde oder Rück- und/oder Vorsprünge aufweist oder passgenau bezüglich des Kopplungselementes geformt ist.

Nachfolgend ist die Erfindung unter Bezugnahme auf die beigefügten Figuren anhand diverser Ausführungsbeispiele beschrieben. Es zeigen:
- **Fig.** 1**:**: eine schematische perspektivische Darstellung einer Ausgestaltung des erfindungsgemäßen Kopplungselementes mit Vorsprüngen, sowie Rücksprüngen an der Dose,
- **Fig. 2:**: eine schematische Schnitt-Darstellung einer Ausgestaltung des erfindungsgemäßen Kopplungselementes mit Vorsprüngen, sowie Rücksprüngen an der Dose, wobei der zusammengesetzte Zustand rechts abgebildet ist,
- **Fig. 3:**: eine schematische perspektivische Darstellung einer Ausgestaltung des erfindungsgemäßen Kopplungselementes mit Gewinde und Gegengewinde in der Dose,
- **Fig. 4:**: eine schematische Schnitt-Darstellung einer Ausgestaltung des erfindungsgemäßen Kopplungselementes mit Gewinde und Gegengewinde in der Dose, wobei der zusammengesetzte Zustand rechts abgebildet ist,
- **Fig. 5:**: eine schematische Schnitt-Darstellung einer Ausgestaltung des erfindungsgemäßen Kopplungselementes, welches passgenau in der Dose untergebracht ist, wobei der zusammengesetzte Zustand rechts abgebildet ist,
- **Fig. 6:**: eine schematische Schnitt-Darstellung einer Ausgestaltung des erfindungsgemäßen Kopplungselementes mit Gewinde und Gegengewinde in einem Vermittlungsring, welcher mit der Dose gefügt ist, wobei der zusammengesetzte Zustand rechts abgebildet ist,
- **Fig. 7:**: eine schematische Schnitt-Darstellung einer Ausgestaltung des erfindungsgemäßen Kopplungselementes, wobei das Kopplungselement mindestens einen Absatz aufweist und aus zwei Abschnitten mit unterschiedlichen Durchmessern gebildet ist, um flexibel für unterschiedliche Dosendurchmesser einsetzbar zu sein und
- **Fig. 8:**: eine schematische Schnitt-Darstellung des Anfangs- und des Endstadiums des erfindungsgemäßen Verfahrens zur nachträglichen stufenlosen Einstellung der Dosentiefe einer Dose der Gebäudeinstallationstechnik.

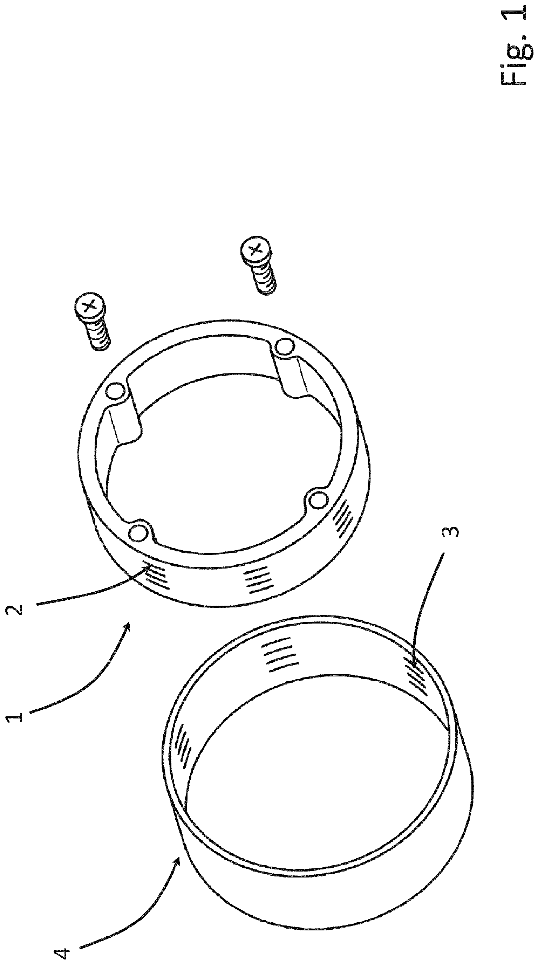

Das in Figur 1 schematisch in einer eine perspektivischen Darstellung gezeigte erfindungsgemäße Kopplungselement 1 weist Rastmittel 2 auf, welche Rastmittel 2 mit Rastmitteln 3 der Dose 4, insbesondere Vorund/oder Rücksprüngen, zur stufenlosen Einstellung der Dosentiefe wechselwirkt. Über die Rastmittel 2, 3 kann die Dosentiefe intuitiv und werkzeuglos auf das gewünschte Maß stufenlos eingestellt werden. Die Rastmittel 2,3 können vollumfänglich oder auch nur einen Bruchteil des Umfangs, wie dargestellt, einnehmen, wobei der Anteil der Rastmittel 2,3 an einem vollen Umfang der Dose 4 auf geschickte Art und Weise dazu genutzt werden kann, die aufzuwendende Kraft zum Rasten, also: zur Verstellung der Dosentiefe, einzustellen. Dabei können die Rastmittel 2, 3 insbesondere auch an vorstehenden Elementen der Dose 4, beispielsweise Schraubdomen, angeordnet sein. Dadurch können bewährte Designs von Unterputzdosen im Wesentlichen beibehalten werden, um das erfindungsgemäße Kopplungselement 1 an die Dose 4 anzukoppeln.

In der dargestellten Ausgestaltung weist das Kopplungselement 1 Schraubdome zur Festlegung von elektrischen Geräten, insbesondere von Steckdosen oder Schaltern, auf, die einen Anschluss an die Dose 4 über Schrauben ermöglichen. Es versteht sich, dass auch eine reine Befestigung der elektrischen Unterputz-Geräte mittels Spreiz-Krallen denkbar ist, so dass die Schraubdome lediglich optional sind.

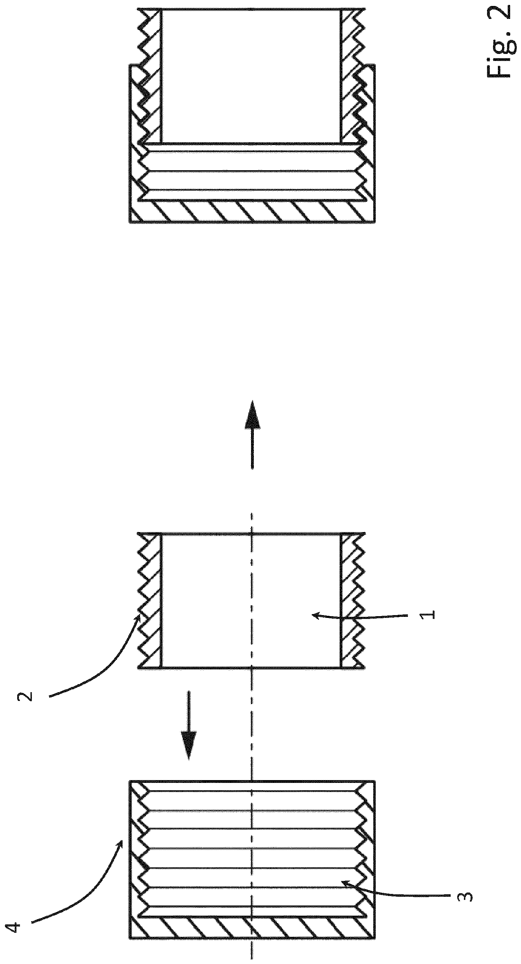

In Figur 2 ist eine schematische Schnitt-Darstellung einer Ausgestaltung des erfindungsgemäßen Kopplungselementes 1 mit Vorsprüngen, sowie Rücksprüngen an der Dose 4 visualisiert, wobei der zusammengesetzte Zustand rechts abgebildet ist. Es zeigt sich, dass die Dosentiefe erhöht worden, insbesondere auf das gewünschte Maß eingestellt worden ist, indem das Kopplungselement 1 in die Dose 4 eingesetzt worden ist. Hierdurch kann beispielsweise zusätzlicher Bauraum für in der Unterputzdose unterzubringende Aktoren geschaffen werden. Die Dimensionierung der Rastmittel 2, 3 ist dabei so gewählt, dass die Verstellung im Bereich einer Diskretisierung von 4 mm oder weniger, insbesondere 2 mm oder weniger gegeben ist.

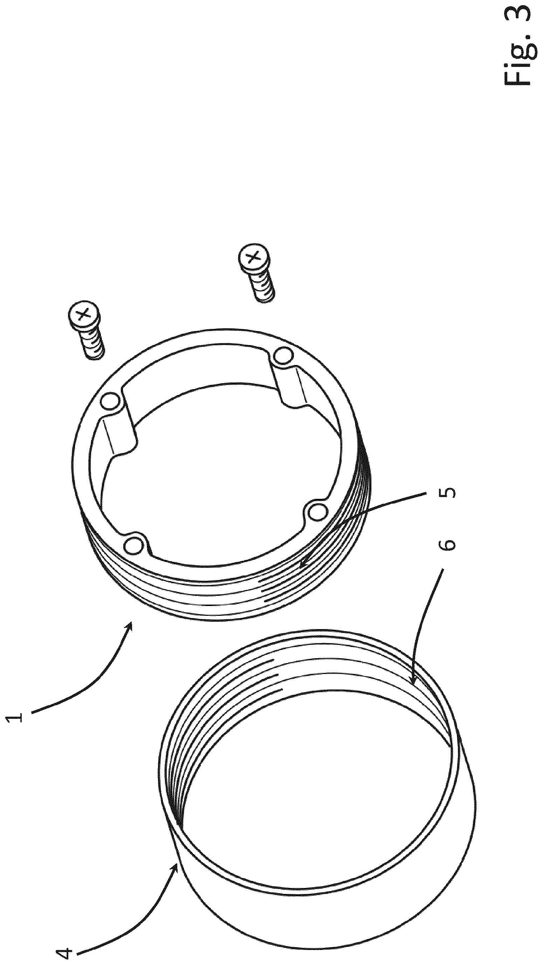

Figur 3 ist eine schematische perspektivische Darstellung einer Ausgestaltung des erfindungsgemäßen Kopplungselementes 1 mit Gewinde 5 und Gegengewinde 6 in der Dose (analog zu Figur 1) 4. Das Gewinde 5 erlaubt die werkzeuglose Einstellung der Dosentiefe, welche schnell und einfach handzuhabend für den Installateur, insbesondere den Elektriker realisierbar ist. Die Gewindelösung erlaubt zudem eine besonders starke Festlegung des Kopplungselementes 1 in der Dose 4, da sich das Gewinde 5 vollumfänglich an dem Gegengewinde 6 der Dose 4 abstützt. Auch in dieser Ausgestaltung kann das Gegengewinde 6, insbesondere auch an vorstehenden Elementen der Dose 4, beispielsweise Schraubdomen, angeordnet sein, um bewährte Dosen-Designs nur marginal anpassen zu müssen.

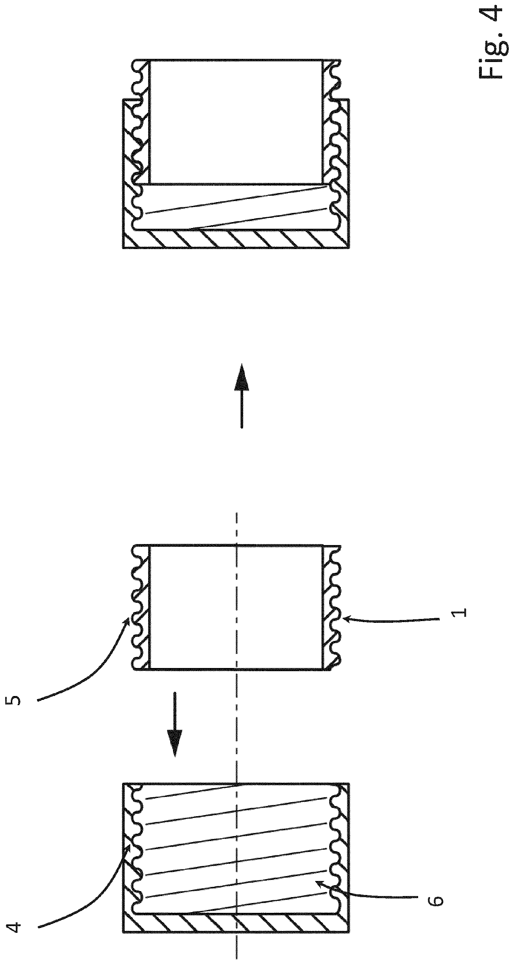

In Figur 4 ist eine schematische Schnitt-Darstellung einer Ausgestaltung des erfindungsgemäßen Kopplungselementes 1 mit Gewinde 5 und Gegengewinde 6 in der Dose 4 gezeigt, wobei der zusammengesetzte Zustand rechts abgebildet ist (analog Figur 2).

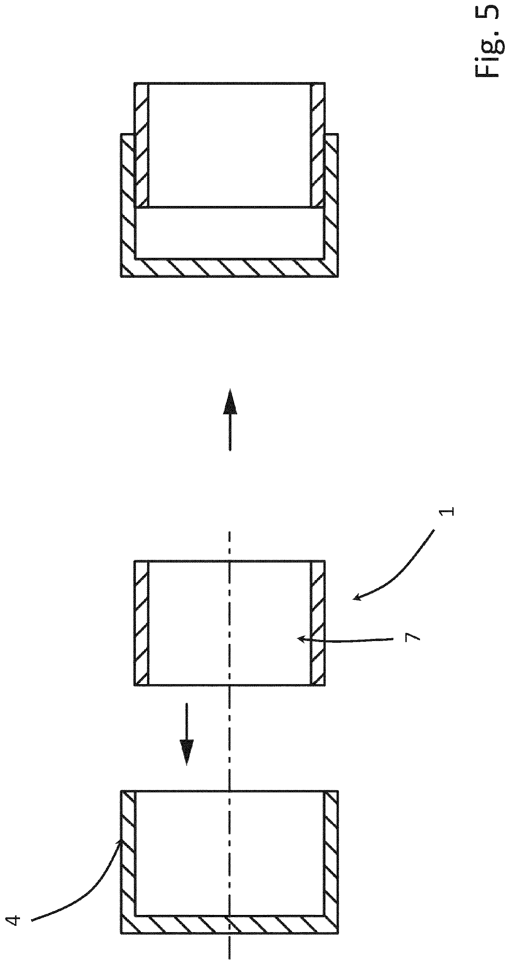

Figur 5 zeigt eine schematische Schnitt-Darstellung einer Ausgestaltung des erfindungsgemäßen Kopplungselementes 1 welches passgenau in der Dose 4 untergebracht ist, wobei der zusammengesetzte Zustand rechts abgebildet ist. Dadurch, dass das Kopplungselement 1 als Passstück 7 bezüglich der Dose 4 ausgebildet ist, kann die Dosentiefe besonders einfach eingestellt werden - auch wenn diese Lösung ein gewisses Maß an Verstellanfälligkeit aufweist, da die Fixierung des Kopplungselementes 1 nicht robust wie bei der Schraub- oder Rastlösung ist. Daher kann es beim Einsetzen eines elektrischen Gerätes zu einer unerwünschten Verstellung des Kopplungselementes 1 und damit der Dosentiefe kommen. Jedoch ist auch diese Lösung besonders einfach herstellbar, da keinerlei Anpassung der Dose 4 erforderlich ist (wenngleich mit den vorgeschriebenen Handhabungsnachteilen).

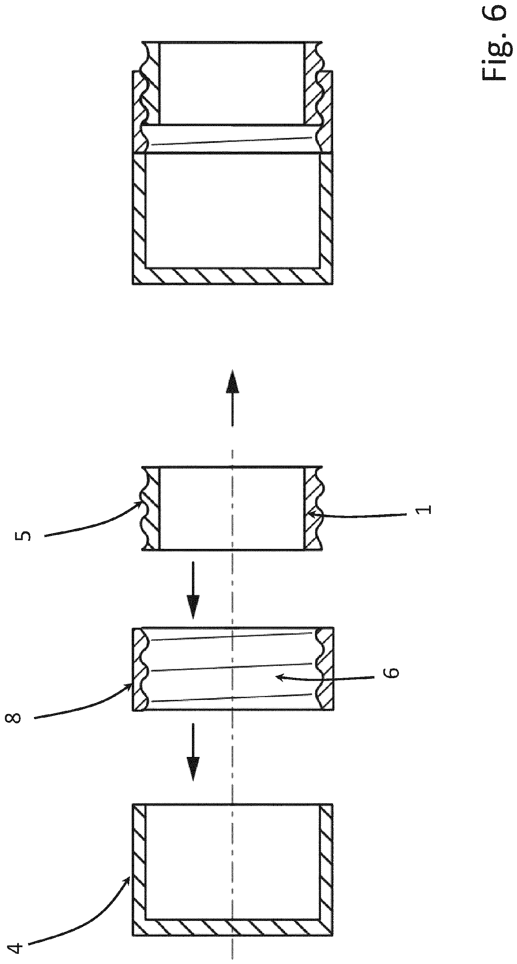

Figur 6 zeigt eine schematische Schnitt-Darstellung einer Ausgestaltung des erfindungsgemäßen Kopplungselementes 1 mit Gewinde 5 und Gegengewinde 6 in einem Vermittlungsring 8, welcher mit der Dose 4 gefügt ist, wobei der zusammengesetzte Zustand rechts abgebildet ist. Durch einen solchen Vermittlungsring 8, welcher mit der Dose 4 gefügt ist (insbesondere kann dieser auch in die Dose 4 eingesetzt sein, beispielsweise als Passstück, welches unter Vorspannung stehend in die Dose 4 eingetrieben wird), wird auf vorteilhafte Art und Weise erreicht, dass eine erfindungsgemäße Schraub- oder Rastlösung unabhängig von dem Vorsehen einer entsprechenden Modifikation der Dose 4 durchführbar wird.

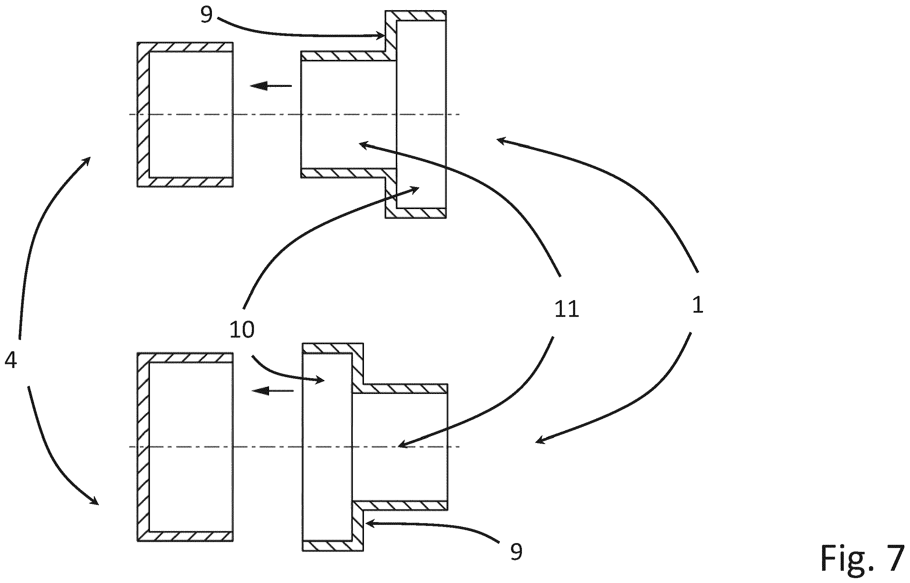

Figur 7 visualisiert eine schematische Schnitt-Darstellung einer Ausgestaltung des erfindungsgemäßen Kopplungselementes 1, wobei das Kopplungselement 1 mindestens einen Absatz 9 aufweist, hier: genau einen, und aus zwei Abschnitten 10, 11 mit unterschiedlichen Durchmessern gebildet ist, um flexibel für unterschiedliche Dosendurchmesser, beispielsweise 60 mm und 70mm, einsetzbar zu sein. Auf diese Art und Weise kann nicht nur die Dosentiefe stufenlos für unterschiedliche Dosendurchmesser eingestellt werden, sondern auch ein Adapterstück realisiert werden, falls ein Dosendurchmesser verändert, beispielsweise vergrößert werden soll (Bauraumgewinn).

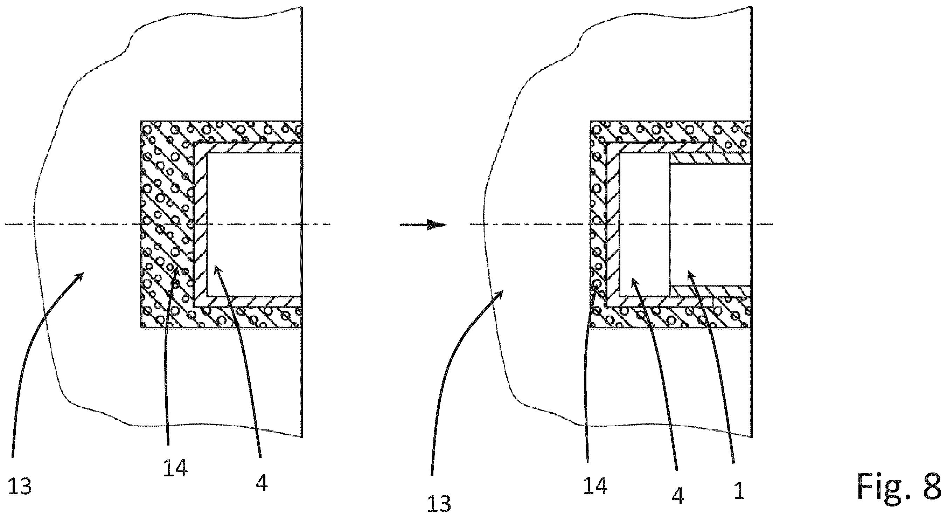

In Figur 8 ist das Anfangs- und das Endstadium des erfindungsgemäßen Verfahrens zur nachträglichen stufenlosen Einstellung der Dosentiefe einer Dose 4 der Gebäudeinstallationstechnik dargestellt. Das Verfahren erlaubt die Festlegung von elektrischen Geräten in der Dose 4, wobei die Dose 4 in einer Ausnehmung 12 einer Wand 13 mittels eines Festlegungsmittels 14, insbesondere Gips, festgelegt ist, welches Verfahren die folgenden Schritte umfasst:
- Lösen der in der Ausnehmung 12 befindlichen Dose 4, so dass diese in Richtung der Dosentiefe verschieblich ist,
- Verschieben der Dose 4 in die Ausnehmung 12 der Wand 13 hinein,
- Ankopplung eines erfindungsgemäßen Kopplungselementes 1 an die Dose 4, wobei die gewünschte Dosentiefe stufenlos eingestellt wird und
- Festlegung der Dose 4 und/oder des Kopplungselementes 1 mit einem Festlegungsmittel 14, insbesondere Gips.

Durch diese Verfahren wird auf vorteilhafte Weise erreicht, dass selbst flache Dosentiefen, beispielsweise 40 mm, nachträglich, ohne einen aufwendigen und nicht nachhaltigen Dosenwechsel vornehmen zu müssen, erhöht werden können, um Bauraum zu gewinnen und elektrische Geräte ordnungsgemäß und einfach in der Dose 4 durch das erfindungsgemäße Kopplungselement 1 unterzubringen. Dieses erlaubt beispielsweise, dass Aktoren, welche regelmäßig einen Platzbedarf an Dosentiefe von ca. 20 mm aufweisen, sogar im Bestandsbau realisierbar werden. Einzige Voraussetzung dafür ist, dass die Bohrkrone zur Definierung der zylindrischen Wandausnehmung eine Tiefe aufweist, die höher ist, als die Dosentiefe. Dieses ist jedoch im Bestandsbau regelmäßig der Fall da typische Bohrkronen keinen Anschlag haben oder erst nach ca. 70 mm, so dass diese Einschränkung eher theoretischer Natur ist. Damit trägt das erfindungsgemäße Verfahren auf geschickte Art und Weise dazu bei, dass im Bestandsbau nachträglich der für die Integration von Aktoren notwendige Bauraum in der Unterputzdose auf nachhaltige Weise bereitgestellt werden kann und gleichzeitig einen einfachen Einbau von elektrischen Geräten, wie Schaltern, Dimmern, Steckdosen oder dergleichen zu ermöglichen.

Die Erfindung ist anhand von Ausführungsbeispielen beschrieben. Ohne den Umfang der geltenden Ansprüche zu verlassen, ergeben sich für einen Fachmann zahlreiche weitere Möglichkeiten, diese umzusetzen, ohne dass dieses im Rahmen dieser Ausführungen im Einzelnen erläutert werden müsste.

### Bezugszeichenliste

- 1: Kopplungselement
- 2: Rastmittel
- 3: Rastmittel
- 4: Dose
- 5: Gewinde
- 6: Gegengewinde
- 7: Passstück
- 8: Vermittlungsring
- 9: Absatz
- 10: Abschnitt
- 11: Abschnitt
- 12: Ausnehmung
- 13: Wand
- 14: Festlegungsmittel

## Patentansprüche

1. Kopplungselement zum Ankoppeln an eine Dose (4) der Gebäudeinstallationstechnik, insbesondere einer Unterputzdose, zur Festlegung von elektrischen Geräten, insbesondere Steckdosen oder Schaltern, in der Dose (4), mit einem freien Ende, **dadurch gekennzeichnet, dass** das Kopplungselement (1) so an das freie Ende der Dose (4) angekoppelt ist, dass die Dosentiefe der Dose (4) stufenlos einstellbar ist.

2. Kopplungselement nach Anspruch 1, **dadurch gekennzeichnet, dass** das Kopplungselement (1) ein Gewinde (5) aufweist, welches mit einem in der Dose (4) festgelegten Gegengewinde (6) wechselwirkt.

3. Kopplungselement nach Anspruch 2, **dadurch gekennzeichnet, dass** das Gegengewinde (6) in der Dosenwandung angeordnet ist.

4. Kopplungselement nach Anspruch 2, **dadurch gekennzeichnet, dass** das Gegengewinde (6) in einem in der Dosenwandung gehaltenen Vermittlungsring (8) angeordnet ist.

5. Kopplungselement nach Anspruch 1, **dadurch gekennzeichnet, dass** das Kopplungselement (1) mindestens ein Rastmittel (2) aufweist, welches mit Vor- und/oder Rücksprüngen der Dose (4) zur stufenlosen Einstellung der Dosentiefe wechselwirkt.

6. Kopplungselement nach Anspruch 5, **dadurch gekennzeichnet, dass** die Rastmittel (2) als auf der Außenseite des Kopplungselementes (1) angeordnete Vor- und/oder Rücksprüngen ausgebildet sind, welche mit dazu korrespondierenden Rückund/oder Vorsprüngen (3) der Dose (4) oder eines in die Dose (4) eingesetzten Vermittlungsrings (8) zur stufenlosen Einstellung der Dosentiefe wechselwirken.

7. Kopplungselement nach Anspruch 1, **dadurch gekennzeichnet, dass** das Kopplungselement (1) als Passstück (7) bezüglich der Dose (4) ausgebildet ist und kraftschlüssig zur stufenlosen Einstellung der Dosentiefe in diese eingesetzt ist.

8. Kopplungselement nach einem der Ansprüche 1 bis 7, **dadurch gekennzeichnet, dass** das Kopplungselement (1) mindestens einen Absatz (9) aufweist und aus zwei Abschnitten (10, 11) mit unterschiedlichen Durchmessern gebildet ist, um flexibel für unterschiedliche Dosendurchmesser einsetzbar zu sein.

9. Kopplungselement nach einem der Ansprüche 1 bis 8, **dadurch gekennzeichnet, dass** das Kopplungselement (1) Schraubdome zur Festlegung von elektrischen Geräten, insbesondere von Steckdosen oder Schaltern, aufweist, die einen Anschluss an die Dose (4) über Schrauben ermöglichen.

10. Verwendung eines Kopplungselementes gemäß einem der Ansprüche 1 bis 9 zur Überbrückung der Distanz zwischen freiem Ende der Dose (4) und einer Wandebene.

11. Verwendung nach Anspruch 10, **dadurch gekennzeichnet, dass** die Wandebene eine Wandverkleidung, insbesondere ein Spritzschutz im Küchenbereich oder ein Fliesenspiegel in einem Badezimmer, Hauswirtschaftsraum oder dergleichen oder ist.

12. Verwendung nach Anspruch 10, **dadurch gekennzeichnet, dass** die Wandebene eine Wanddämmung, im Außen- oder Innenbereich einer Immobilie, ist.

13. Verwendung nach Anspruch 11, **dadurch gekennzeichnet, dass** die Wandebene eine Installationsebene, insbesondere eine Rigipswand darstellt.

14. Dose und Kopplungselement gemäß einem der Ansprüche 1 bis 9 zum Ankoppeln an die Dose (4), wobei die Dose (4) eine herkömmliche Unterputzdose ist, die zur Ankopplung des Kopplungselementes (1) ein Gegengewinde (6) oder Rückund/oder Vorsprünge aufweist oder passgenau bezüglich des Kopplungselementes (1) geformt ist.

15. Verfahren zur nachträglichen stufenlosen Einstellung der Dosentiefe einer Dose (4) der Gebäudeinstallationstechnik, insbesondere einer Unterputzdose, zur Festlegung von elektrischen Geräten, wobei die Dose (4) in einer Ausnehmung (12) einer Wand (13) mittels eines Festlegungsmittels (14), insbesondere Gips, festgelegt ist, umfassend die folgenden Schritte:
- Lösen der in der Ausnehmung (12) befindlichen Dose (4), so dass diese in Richtung der Dosentiefe verschieblich ist,
- Verschieben der Dose (4) in die Ausnehmung der Wand (13) hinein,
- Ankopplung des Kopplungselementes (1) nach einem der Ansprüche 1 bis 8 an die Dose (4), wobei die gewünschte Dosentiefe stufenlos eingestellt wird und
- Festlegung der Dose (4) und/oder des Kopplungselementes (1) mit einem Festlegungsmittel (14), insbesondere Gips.
